# EUROPEAN PATENT APPLICATION

(11) **EP 4 682 841 A1**
(43) Date of publication of application: **21.01.2026**
(21) Application number: 24189280.1
(22) Date of filing: 17.07.2024
(51) Int. Cl.: G06V 10/774, G06V 10/82, G06V 20/59

(54) **SYSTEM, METHOD, AND SOFTWARE FOR CREATING IMAGE DATA**

(71) Applicant: Aptiv Technologies AG, 8200 Schaffhausen (CH)
(72) Inventor: HASECKE, Frederik, 8200 Schaffhausen (CH)
(74) Representative: Lewis Silkin LLP

(57) **Abstract**

System (1) for creating image data (10). A simulator block (2) is provided for outputting simulated image data (3) of at least one scene in a simulated environment, wherein the simulated image data (3) comprises simulated sensor data (4) of one or more simulated sensors in the simulated environment and label data (5) providing information associated with the respective scene. A generator block (9) for generating, from the simulated image data (3), image data (10) of one or more scene variants of the at least one scene, wherein the generator block (9) is configured to manipulate parts of the simulated sensor data (3) to increase, in the one or more scene variants, characteristics associated with real-world sensor data.

## Description

### Introduction

The present disclosure relates to a system for creating image data, which may be used for example for training a machine learning model or validating existing methods and rule based algorithms. The disclosure also relates to associated methods and software for creating image data. The present disclosure is particularly relevant to the generation of training data, including annotated training data, using a simulated environment.

### Background

Sensor technologies are commonly used to monitor the interior of a vehicle to enhance safety and comfort. For example, interior sensing often used by Driver Monitoring Systems (DMS) and Occupant Monitoring Systems (OMS). Often, these systems leverage data from various sources such as RGB cameras, Near-Infrared (NIR) sensors, RGB-IR cameras, Time-of-Flight (ToF) sensors, stereo cameras, and radar to monitor the state and behaviour of drivers and passengers within the vehicle.

RGB Cameras capture images in the visible spectrum and are useful in recognizing facial features, expressions, and head movements. They are often useful in in assessing the driver's attention and detecting signs of drowsiness or distraction by analysing eye gaze, blink rate, and head position.

Near-Infrared (NIR) Cameras operate beyond the visible spectrum, and may thereby allow for reliable monitoring in low-light conditions. They can detect the presence of occupants, their position, and eye movement and blinking, even in the absence of sufficient visible light.

RGB-IR Cameras combine the capabilities of RGB and infrared imaging, enabling the system to operate in a wide range of lighting conditions. This dual functionality makes them versatile for both driver and occupant monitoring, capturing detailed visual data that can be used to infer attention, identify occupants, and even detect left-behind items.

Time-of-Flight (ToF) Sensors provide depth information by measuring the time it takes for light to travel to an object and back. This data may then be used to construct 3D models of the vehicle's interior.

Stereo Cameras use two or more cameras to capture the same scene from slightly different angles, allowing depth information to be derived.

The data collected by such sensors can be used by advanced algorithms and machine learning models to derive valuable insights for various applications:
- Attention and Drowsiness Detection: By analyzing eye movements, blink rates, and head positions, systems can determine the driver's level of attention and alertness, issuing warnings if signs of drowsiness or distraction can be detected.
- Body Poses and Gestures: The 3D data from ToF and stereo cameras enables the recognition of body poses and gestures, which can be used for intuitive interaction with the vehicle's systems or for detecting discomfort and unsafe postures.
- Signs Monitoring: Some optical sensors can monitor vital signs such as heart rate and respiration rate, offering insights into the occupant's physiological state, which could be indicative of stress, discomfort, or medical emergencies.
- Occupancy and Child Left-Behind Detection: Sensors can identify the presence and position of occupants, distinguishing between adults, children, and pets, and can alert the driver if a child or pet is inadvertently left behind in the vehicle.

To train such machine learning models, it is necessary to used annotated training data. Acquiring annotated data for features related to interior sensing in vehicles, such as gazes, body poses, and occupancy, is a complex and resource-intensive task. The traditional process involves collecting vast amounts of raw sensor data. That is, typically one or more of the above sensors installed in a vehicle environment will be used to simultaneously capture real-world image data during various scenarios to provide a huge number of images of different scenes. This raw data then needs to be meticulously labelled by human annotators to identify and mark various elements such as facial features, gestures and occupant positions. This manual labelling is not only time-consuming but also expensive, given the precision required to ensure the data's usefulness for training machine learning algorithms. Moreover, some labels are not easily added even by skilled annotators. For example, adding gaze direction labels typically requires a special recording rig, that enables the active prompting of various gaze targets in order to derive the gaze direction.

To mitigate these challenges, there are companies that provide simulated environments for generating images of simulated scenes for use as training data. These simulation platforms generate synthetic data that attempt to recreate real-world scenarios captured by vehicle sensors, particularly for cameras capturing RGB and depth information. The advantage of simulated data is that it can be automatically annotated, drastically reducing the time and cost associated with manual labelling. This enables the generation of large, diverse datasets essential for training robust machine learning models for driver/occupant monitoring systems (DMS/OMS) applications.

Although simulators are effective in producing large volumes of data, there is a notable domain shift when moving from simulated to real-world data. That is, simulated environments still struggle to capture all the nuances and unpredictable variables of real-world settings. That is, the output of these systems would typically be in the so-called "uncanny valley". This uncanny valley is a phenomenon where visual simulations closely resemble the real world but aren't quite convincingly realistic and hence are somewhat unsettling. This domain shift can lead to discrepancies between the performance of machine learning algorithms trained on simulated data and their effectiveness in real-world applications. The models might perform well in a controlled, simulated environment but fail to generalize to the complex, variable conditions encountered in actual vehicle interiors.

Moreover, while simulators perform tolerably when replicating camera-based sensors, they still face significant difficulties in accurately simulating the domains of Near-Infrared (NIR) sensors. NIR sensors operate in a part of the electromagnetic spectrum that is not visible to the human eye and replicating its interaction with varied materials and conditions (e.g., eyes, clothing, skin) remains a challenge.

Accordingly, there remains a need to improve the efficiency of producing training data for training machine learning models.

### Summary

According to a first aspect, there is provided a system for creating image data, the system comprising: a simulator block for outputting simulated image data of at least one scene in a simulated environment, wherein the simulated image data comprises simulated sensor data of one or more simulated sensors in the simulated environment and label data providing information associated with the respective scene; and a generator block for generating, from the simulated image data, image data of one or more scene variants of the at least one scene, wherein the generator block is configured to manipulate parts of the simulated sensor data to increase, in the one or more scene variants, characteristics associated with real-world sensor data.

In this way, a simulator implemented as a simulator functional block can be used to automate the generation of a large volume of annotated image data, with this data being post-processed to more closely mimic the characteristics of data generated by real-world sensors using a generator functional block. That is, the weightings and constraints applied during the generation of the finalised image data may be configured to enhance the performance of subsequent training, validation or testing processes. For example, where such image data is used for training a machine learning model subsequently, the domain shift associated with using this image data originating from a simulated environment can be minimised, whilst at the same time maintaining the benefits of large, diverse data volumes and automatic labelling. This capability is particularly valuable in domains where collecting and annotating data is prohibitively expensive or time-consuming.

In embodiments, the generator block comprises a machine learning model. In this way, the generator block can be trained to enhance and introduce characteristics associated with real-world sensor data. These characteristics may vary depending on the type of sensor, with the resultant synthetic output more closely mimicking the features of respective sensor data that would be generated from real-world testing.

In embodiments, the machine learning model was trained based on real-world sensor data. In this way, the mimicking of features of real-world sensor data can be achieved based on the characteristics of actual real-world sensor data. For instance, a relatively small set of test sensor data can be used to generate a large volume of synthetic image data.

In embodiments, the machine learning model was trained using real-world sensor data from analogous scenes in a real-world environment. In this way, one or a small number of real-world test environments can be used to characterise sensor behavior in this class of environment (e.g. the interior cabin of a vehicle) and then train the generator to better mimic the features of real-world sensor data.

In embodiments, the machine learning model is a generative artificial intelligence model.

In embodiments, machine learning model comprises one of an autoencoder, variational autoencoder, a generative adversarial network, a diffusion model, and/or a latent diffusion model.

In embodiments, the generator block further comprises a conditional input for inputting one or more conditions for generating the image data constrained by the one or more conditions.

In embodiments, the generator uses the conditional input in combination with the simulated image data and the label data for generating the image data.

In embodiments, the label data comprises one or more of occupant age, occupant ethnicity, occupant height, occupant clothing, vehicle cabin configuration, camera information, object class, human pose, scene depth, semantic segmentation, object detection, occupant gender, occupant gaze, occupant emotion.

In embodiments, the generator block is configured to manipulate parts of the label data based on the parts of the simulated sensor data manipulated in the one or more scene variants.

In embodiments, the generator block is configured to further generate image data from real-world sensor data from analogous scenes in a real-world environment, wherein the generator block is configured to manipulate parts of the real-world sensor data based on simulated image data of at least one scene in the simulated environment.

According to a second aspect, there is provided a method of creating image data, the method comprising: outputting, from a simulator block, simulated image data of at least one scene in a simulated environment, wherein the simulated image data comprises simulated sensor data of one or more simulated sensors in the simulated environment and label data providing information associated with the respective scene; and generating, from the simulated image data, image data of one or more scene variants of the at least one scene, wherein the generator block is configured to manipulate parts of the simulated sensor data to increase, in the one or more scene variants, characteristics associated with real-world sensor data.

In embodiments, the step of generating the image data further comprises constraining the generation using one or more conditions inputted from a conditional input.

In embodiments, the step of generating the image data further comprises manipulating parts of the label data based on the parts of the simulated sensor data manipulated in the one or more scene variants.

In embodiments, the step of generating the image data further comprises generating image data from real-world sensor data from analogous scenes in a real-world environment, wherein the generator block manipulates parts of the real-world sensor data based on simulated image data of at least one scene in the simulated environment.

According to a third aspect, there is provided a non-transient computer readable medium containing program instructions for causing a computer to perform the above method.

According to a fourth aspect, there is provided software comprising instructions which, when executed by a processor cause the processor to perform the above method.

### Brief Description of Drawings

Illustrative embodiments will now be described with reference to the accompanying drawings in which:
Figure 1 shows a schematic illustration of a system for creating image data according to an illustrative embodiment; and
Figure 2 shows a schematic illustration of the method employed by the system of Figure 1.

### Detailed Description

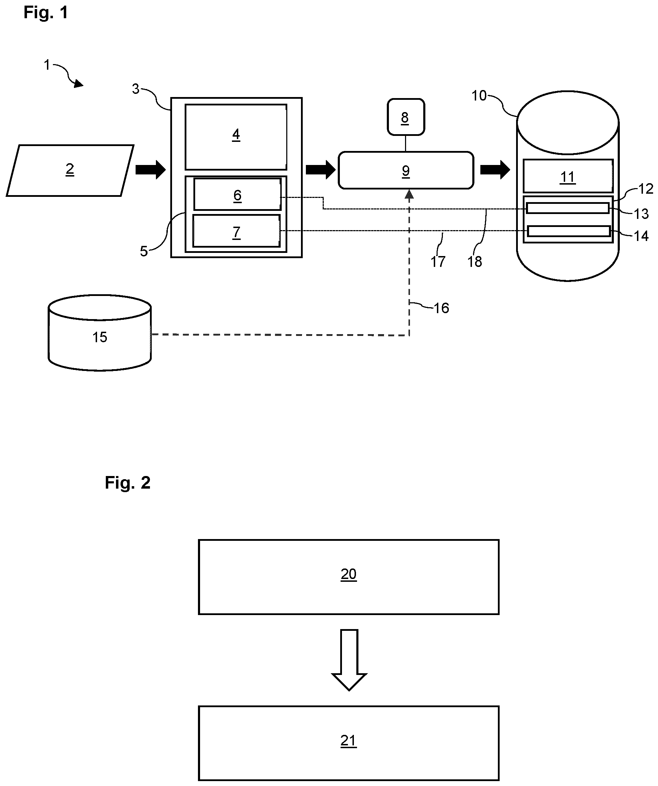

A system 1 for creating image data 10 is shown in Figure 1. The system comprises a simulator block 2 and a generator block 9.

### Simulator Block

The simulator block 2 functions to output simulated image data 3 of scenes in a simulated environment. In this respect, a simulation is an imitative representation of a system that could exist in the real world. As such, the simulator block 2 creates a 3D simulation of an environment, such as a simulated 3D model of the interior of a vehicle which is analogous to the target domain, namely the real-world environment simulation is imitating. The simulator block 2 then generates simulated image data 3 as output data that mimics the output of real sensors as if they were capturing scenes in that simulated environment. For example, a scene may be an image frame of the interior cabin of the vehicle taken by a camera sensor. The simulator block 2 may also match sensor performance characteristics, e.g., cameras in their imager, lens and filter parameters. This provides for the creation of a virtual twin environment that closely matches the target domain. At the same time, the simulator block 2 may simulate occupants and objects within that environment, mimicking their behaviour and characteristics. This thereby allows the real-life use case to be mimicked, in this example being the interior of a vehicle with people and objects inside of the vehicle. The simulator block 2 may allow specific parts of the environment to be removed or moved, and to pose and move objects and occupants inside of the environment. The simulator block 2 may include a physical ray tracing rendering engine for simulating the path of electromagnetic radiation, for instance by rendering physically accurate reflections, refractions, shadows, and indirect lighting.

In addition to the simulated image data 3, the simulator block 2 also creates label metadata 5, which includes simulated labels 6 and simulated information 7. The simulator block 2 is configured to generate this simulated label metadata 5 in the same format and structure as would be associated with manual labelling of real-world data.

Accordingly, the simulator block may supply a dense and precise label set, as well as photorealistic simulated camera images. However, as discussed above, the output simulated image data 3 would typically still be in the so-called "uncanny valley".

### Generator Block

The generator block 9 functions to generate image data 10 from the simulated image data 3. The data 10 includes generated sensor data 11 for one or more scene variants of each simulated scene in the input simulated image data 3. The data 10 also includes associated metadata 12, comprising labels 13 and information 14. The generator block 9 uses generative AI to create the one or more scene variants, and, during this process, is configured to manipulate parts of the simulated sensor data 3 to increase characteristics associated with real-world sensor data.

In this connection, the generator block 9 therefore uses the simulator output, namely the simulated sensor data 4 and simulated label data 6 and the simulated information 7 (such as the age, ethnicity, height, gender, hairstyle, emotion, specific pose, orientation, skin condition (e.g., blemishes, pimples, freckles), and clothing of the simulated occupant, as well as the parameters of the vehicle cabin and camera information) to start and condition the generator process. Furthermore, the generator block 9 may also make use of "ControlNet"-like conditions as well. These conditions influence or "guardrail" the generation process based on the input images, and may provide for Pose Control, Depth Control, Surface Normal Control and "line art" variation of the simulated input image. These condition controls may be applied, for example, as "zero convolutions" that are added onto the original UNet weights in Latent diffusion models. The resulting output of the generator block 9 therefore captures the same semantic and visual properties as the simulator output, with slight adjustments in the pixels, to resemble the trained and desired real-world data more closely. As such, the original labels in the label metadata 5 still apply to the newly generated scene variant.

The generator block 9 comprises a generative AI model, such as an Autoencoder, Variational Autoencoder (VAEs), Generative Adversarial Network (GANs), Diffusion model, and Latent Diffusion model, which functions to create synthetic data from the input simulated data. These different models have different advantages, but all are able to generate new data samples that mimic the characteristics of real annotated image data. In this connection:
- Autoencoders and Variational Autoencoders are adept at learning compressed representations of data, which can then be used to reconstruct new data samples that are similar to the original dataset.
- VAEs add a probabilistic element, allowing for the generation of new samples by sampling from the learned distribution.
- Generative Adversarial Networks (GANs) operate through a competitive process between two networks: a generator that creates data and a discriminator that evaluates its authenticity. This adversarial process leads to the generation of high-quality, realistic data samples.
- Diffusion Models gradually construct data samples through a process that starts from a random distribution and iteratively adds structure based on learned data characteristics, resulting in highly realistic samples.
- Latent Diffusion Models combine aspects of VAEs and diffusion processes, these models operate in a compressed latent space, allowing for efficient generation of complex data samples with high fidelity.

Irrespective of the generative model employed by the generator block 9, it can create synthetic images, sensor readings, and annotated features and output these as image data 10. This image data 10 can then be used, for example, to aid in the development and training of machine learning models, e.g. for detecting objects, depth, body poses, etc.

In some embodiments, such as the embodiment shown in Figure 1, the generator 9 can be steered using a conditional input 8. Prompts for conditions may be input via conditional input 8, which are then used to constrain the generator during the generation of the image data 10. This introduces a mechanism for making "prompt-driven" alterations to the data, thereby increasing its variability and richness. Prompts may be provided by user inputs or prescribed based on a particular use application. The conditional input 8 may also make use of the associated labels 6 and the simulated information 7 to provide an added control level for the generation process. The conditional input thereby provides steerability, allowing the features of the generated data to be controlled, such as specific poses or expressions. As such, for example, training datasets with desired characteristics can be generated.

Importantly, with embodiments, because the image data is generated based on simulated data inputs from a simulated environment analogous to the real-world environment, such as a simulated 3D model of a vehicle's interior with one or more simulated occupants, this inherently constrains the generation of the image data. This mitigates the risk of the generative AI generating unrealistic or physically impossible scenarios, which could otherwise compromise the training of robust models. In particular it avoids biases associated with overfitting to data. That is, if the image data for the generative models contain biases, the generated data will reflect and even amplify these biases, leading to models that perform poorly on unbiased or differently biased real-world data. At the same time, there are also concerns related to the ethical use of generative AI, including the potential for creating misleading data or privacy implications related to the replication of sensitive or personal features.

In addition, in embodiments, real data 15 in the target domain can also be optionally used to train the generator block 9 or to feed into the generator bock 9 to align the output image data more closely with the characteristics of real-world data. This may thereby narrow the gap between the simulated and actual domain. In this respect, in embodiments, the generator block 9 is pre-trained on real data of the target domain to capture and recreate the visual and semantic content of the domain. In other embodiments, the generator block 9 may use a foundation model, which is fine-tuned in the inference process with minimal examples of real data and/or specific prompt engineering to better mimic real-world data.

### Process

Figure 2 shows a schematic illustration of method employed by the system of Figure 1. In step 20, a simulated image data 3 of at least one scene in a simulated environment is created using the simulator block 2. The simulated image data 3 comprises simulated sensor data 4 and label data 5. In step 21, image data 10 is generated by the generator block 9 using the simulated image data 3. The generator block 9 generates one or more scene variants for each simulated scene. Within each variant, generator block 9 has manipulated parts of the simulated sensor data 3 to increase characteristics associated with real-world sensor data.

By adjusting and manipulating parts of the original simulation image data 3, such as the simulated sensor data 4 and the associated meta information 7, the generator block 9 can apply slight changes to the output image data. These manipulated parameters influence the generated data, while still staying close to the defined conditions that are given by the simulator output and labels. This manipulation enables individual aspects to be changed in scene variants, such as the age, clothing and ethnicity of occupants in the simulator output. The label metadata 5 of the original simulated scene/frame still creates the bounds in which the generative process can apply changes, and therefore the labels are still valid for the manipulated frame.

Accordingly, the above embodiments provide a domain adaptation technique for tackling the effect of domain shift by increasing the similarity of the simulation to real-world data. In this respect, the generator block may achieve this based on pretraining on real target data or "style adjustment" to mimic its characteristics to thereby enhance the utility of the generated image data. This in turn may provide for, for example, the training and developing of more robust and versatile machine learning models. Furthermore, as the complete system 1 uses the generator block as a plug- and-play part in tandem with the simulator block, the generator block may be easily adjusted or replaced in cases of bias, varying needs, or speed vs quality trade-off.

It will be understood that the embodiments illustrated above shows an application only for the purposes of illustration. In practice, embodiments may be applied to many different configurations, the detailed embodiments being straightforward for those skilled in the art to implement.

For example, it will be understood that the disclosed methods may also be used to allow the enhancement of real-world data with specific use of simulator condition data combined with the generator block. For this, the input to the generator block may be modified to replace all or part of the simulated sensor data with real sensor data of the target environment (e.g. the vehicle cabin). The labels and meta information may still be direct outputs of the simulator block. Specific regions of the real-world data may be masked to allow, for instance, a new object/person/appearance to be created by the generator block, but in an otherwise unchanged image. This may enable the enrichment of real data with pixel perfect labels and controlled behaviour, while enabling the creation of new data points.

Furthermore, it will be understood that although the above examples focus on the training of machine learning models, the image data may also be used for validating existing machine learning models, as well as validation of rule-based algorithms. For example, the image data may be use for performance testing of existing models and algorithms, as well for evaluating manual configuration changes.

## Claims

1. A system for creating image data, the system comprising:
a simulator block for outputting simulated image data of at least one scene in a simulated environment, wherein the simulated image data comprises simulated sensor data of one or more simulated sensors in the simulated environment and label data providing information associated with the respective scene; and
a generator block for generating, from the simulated image data, image data of one or more scene variants of the at least one scene, wherein the generator block is configured to manipulate parts of the simulated sensor data to increase, in the one or more scene variants, characteristics associated with real-world sensor data.

2. A system according to claim 1, wherein the generator block comprises a machine learning model.

3. A system according to claim 2, wherein the machine learning model was trained based on real-world sensor data.

4. A system according to claim 2 or 3, wherein the machine learning model was trained using real-world sensor data from analogous scenes in a real-world environment.

5. A system according to any of claims 2 to 4, wherein the machine learning model is a generative artificial intelligence model.

6. A system according to any of claims 2 to 5, wherein the machine learning model comprises one of an autoencoder, variational autoencoder, a generative adversarial network, a diffusion model, and/or a latent diffusion model.

7. A system according to any preceding claim, wherein the generator block further comprises a conditional input for inputting one or more conditions for generating the image data constrained by the one or more conditions.

8. A system according to any preceding claim, wherein the generator uses the conditional input in combination with the simulated image data and the label data for generating the image data.

9. A system according to any preceding claim, wherein the label data comprises one or more of occupant age, occupant ethnicity, occupant height, occupant clothing, vehicle cabin configuration, camera information, object class, human pose, scene depth, semantic segmentation, object detection, occupant gender, occupant gaze, occupant emotion.

10. A system according to any preceding claim, wherein the generator block is configured to manipulate parts of the label data based on the parts of the simulated sensor data manipulated in the one or more scene variants.
10. A system according to any preceding claim, wherein the generator block is configured to further generate image data from real-world sensor data from analogous scenes in a real-world environment, wherein the generator block is configured to manipulate parts of the real-world sensor data based on simulated image data of at least one scene in the simulated environment.

11. A method of creating image data, the method comprising:
outputting, from a simulator block, simulated image data of at least one scene in a simulated environment, wherein the simulated image data comprises simulated sensor data of one or more simulated sensors in the simulated environment and label data providing information associated with the respective scene; and
generating, from the simulated image data, image data of one or more scene variants of the at least one scene, wherein the generator block is configured to manipulate parts of the simulated sensor data to increase, in the one or more scene variants, characteristics associated with real-world sensor data.

12. A method according to claim 11, wherein the step of generating the image data further comprises constraining the generation using one or more conditions inputted from a conditional input.

13. A method according to claim 11 or 12, wherein the step of generating the image data further comprises manipulating parts of the label data based on the parts of the simulated sensor data manipulated in the one or more scene variants.

14. A method according to any of claims 11 to 13, wherein the step of generating the image data further comprises generating image data from real-world sensor data from analogous scenes in a real-world environment, wherein the generator block manipulates parts of the real-world sensor data based on simulated image data of at least one scene in the simulated environment.

15. A non-transient computer readable medium containing program instructions for causing a computer to perform the method of any one of claims 11 to 14.
